# EUROPEAN PATENT SPECIFICATION

(11) **EP 3 430 757 B1**
(45) Date of publication and mention of the grant of the patent: **13.11.2019**
(21) Application number: 16716920.0
(22) Date of filing: 16.03.2016
(51) Int. Cl.: H04L 5/00, H04W 72/04, H04W 16/14, H04W 84/10

(54) **SECONDARY SERVING CELL SELECTION FOR A WIRELESS COMMUNICATION DEVICE**
AUSWAHL EINER SEKUNDÄREN VERSORGENDEN ZELLE FÜR EINE DRAHTLOSKOMMUNIKATIONSVORRICHTUNG
SÉLECTION DE CELLULE DE DESSERTE SECONDAIRE DESTINÉ À UN DISPOSITIF DE COMMUNICATION SANS FIL

(43) Date of publication of application: 23.01.2019
(73) Proprietor: Telefonaktiebolaget LM Ericsson (publ), 164 83 Stockholm (SE)
(72) Inventor: KRONESTEDT, Fredric, 167 51 Bromma (SE); LUNDEVALL, Magnus, 191 63 Sollentuna (SE); VIKBERG, Jari, 153 38 Järna (SE)
(74) Representative: Ericsson
(86) International application number: PCT/SE2016/050215
(87) International publication number: WO 2017/160195

(56) References cited:
- WO-A1-2015/142271
- US-A1- 2015 065 152
- US-A1- 2016 050 690

## Description

### TECHNICAL FIELD

The proposed technology generally relates to wireless communications, and in particular to a method of secondary serving cell selection for a wireless communication device, a device configured to perform secondary serving cell selection and an indoor radio system and network device comprising such a device, as well as a corresponding computer program and computer-program product, and an apparatus for secondary serving cell selection.

### BACKGROUND

To cope with increasing mobile traffic demands and higher expectations for better user experience, macro cells are complemented with small cells and in particular small indoor cells served by indoor radio systems like Radio Dot Systems, RDS, and Distributed Antenna Systems, DAS, and pico/femto indoor systems, since the majority of mobile traffic is generated in indoor locations. It is often mentioned that 70-80% of the traffic demand comes from indoor areas. Enterprise services are moreover being proposed, offering companies and their employees a solution with range of services and wireless access in their premises. Compared to traditional mobile broadband services, it is expected that enterprise services would target much higher capacity (data demand per user) and user experience targets. For example, enterprise users should get unlimited data when in the office. This is typically not the case for mobile broadband services where user data volumes are limited per month.

Wireless communications use both licensed and unlicensed spectrum. 3rd Generation Partnership Project, 3GPP, technologies typically use licensed spectrum where a single operator uses a part of the licensed spectrum in a country or other area. Unlicensed spectrum is available for e.g. Wi-fi, and it can be used by several parties and operators in the same area. Sharing rules and techniques are employed in order to avoid uncoordinated interference between the users. Due to output power limitations and regulations, the unlicensed spectrum is in many cases useful only in indoor locations.

The patent application US2016/050690 A1 discloses a method for performing carrier aggregation using spectrum shared between an incumbent user and a telecommunications network.

It is being discussed to use Long Term Evolution, LTE, in unlicensed bands (e.g. 5 GHz), so called Licensed Assisted Access, LAA, where unlicensed spectrum is used for data transmissions in combination with a licensed spectrum part used for control signaling.

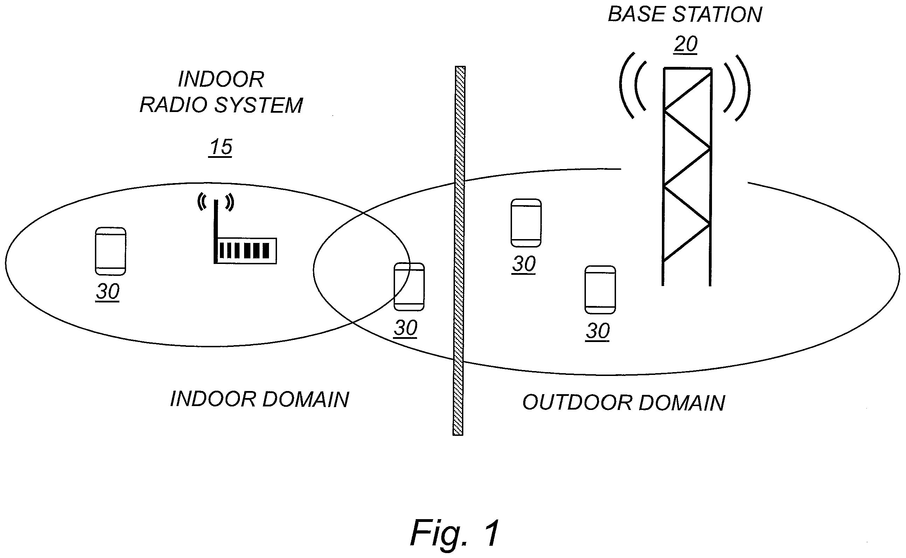

When deploying indoor solutions in an enterprise building, it can be difficult and costly to achieve indoor dominance for user equipment, i.e. a situation when the indoor radio system provides a stronger signal than the outdoor macro base station inside the building, see FIG. 1.

FIG. 1 is a schematic diagram illustrating an example of a wireless communication context including an outdoor domain and an indoor domain in which wireless communication devices 30 are located. An indoor radio system 15 is responsible for serving wireless communication devices 30 in the indoor domain, e.g. using one or more radio heads. A base station 20 is configured to provide one or more macro cells for serving wireless communication devices 30 in the outdoor domain, and possibly also in the indoor domain.

There exists a variety of indoor radio systems, also sometimes referred to as In-Building Systems, IBS, for deployment of antennas indoor.

Distributed Antenna Systems, DAS, have been the most common indoor solution. In an active DAS, the antenna points include means for amplifying the signal, and in some cases also for translating the signal to a different frequency. This frequency can be both lower and higher than the original frequency. In an active DAS based on fiber-optical repeaters, the signal is transformed into an optical signal that is transmitted over low loss optical fibers to a central point where the signal is converted back to Radio Frequency, RF, and subsequently digitalized and down-converted to baseband. RF signals from multiple antenna points are, typically passively, combined at the central point.

Another solution, introduced by the Radio Dot System, RDS, involves downconverting the signal to Intermediate Frequency, IF, and transmitting with low loss over CAT cables. The RDS system is in one perspective a complete radio base station with split architecture, but can also be seen as a type of active DAS, with integrated antenna(s) in the remote unit.

By way of example, an indoor radio system such as an RDS system may include a Base Band Unit, BBU, an Indoor Radio Unit, IRU, and one or more radio heads having one or more associated antennas. The radio head or dot is normally the remote unit with integrated antenna. In a RDS system, the IRU is the head end interfacing the radio head or dot over CAT cable. The IRU may be connected to the BBU, e.g. through a CPRI interface.

Indoor dominance, also sometimes referred to as full dominance, is usually required to connect indoor users to the indoor radio system when a small cell selection offset is used. In LTE, for example, a cell selection offset of up to 9 dB is possible but in many cases the difference between macro and indoor signals can be much larger. The reason is that the macro base station uses much higher power (e.g. 60-80W) than indoor radio systems with small cells (<1W). There can also be line-of-sight propagation from the macro base station towards the building or a low building penetration loss that increase this effect. The indoor small cells also use limited power to avoid radiation effects since users can be very close to the small cell antenna. The lack of indoor dominance, also sometimes referred to as partial dominance, will usually cause the indoor users to be connected to the macro base station in the concerned areas. As a result, there will be a negative impact on the macro capacity since the enterprise users are expected to demand a high amount of data due to the unlimited data service offerings (normally part of enterprise offerings). This will negatively affect all users connected to the macro base station, i.e. regular mobile broadband service users not connected to any indoor radio system. A way to improve indoor dominance is to increase the number of indoor antennas/small cells to overcome the strong macro signals but a drawback is higher cost in this case.

Carrier aggregation allows for extension to a wider overall transmission bandwidth by the aggregation of so-called Component Carriers, CCs. For example, the LTE Rel-8 specifications have been standardized, supporting bandwidths of up to 20 MHz. An LTE Rel-10 operation wider than 20 MHz is possible and appear as a number of LTE CCs to an LTE Rel-10 terminal. The straightforward way to obtain bandwidths wider than 20 MHz is thus by means of carrier aggregation.

The number of aggregated CCs as well as the bandwidth of the individual CCs may be different for uplink and downlink. A symmetric configuration refers to the case where the number of CCs in downlink (DL) and uplink (UL) is the same whereas an asymmetric configuration refers to the case that the number of CCs is different in DL and UL. It is important to note that the number of CCs configured in the network may be different from the number of CCs seen by a terminal: A terminal may for example support more downlink CCs than uplink CCs, even though the network offers the same number of uplink and downlink CCs.

CCs are also referred to as cells or serving cells. More specifically, in an LTE network the cells aggregated by a terminal are denoted primary serving cell (PCell) and secondary serving cells (SCells). The term serving cell comprises both PCell and SCells. All UEs have one PCell. Which cell is a PCell of a UE is terminal-specific and is considered "more important", i.e. vital control signaling and other important signaling is typically handled via the PCell. Uplink control signaling is always sent on a UEs PCell. The component carrier configured as the PCell is the primary CC, whereas all other component carriers are secondary serving cells. The UE can send and receive data both on the PCell and SCells. For control signaling such as scheduling commands this could either be configured to only be transmitted and received on the PCell, but where the commands are also valid for SCell, or it can be configured to be transmitted and received on both PCell and SCells. Regardless of the mode of operation, the UE will only need to read the broadcast channel in order to acquire system information parameters on the Primary Component Carrier (PCC). System information related to the Secondary Component Carriers (SCC) may be provided to the UE in dedicated Radio Resource Control (RRC) messages.

During initial access a LTE Rel-10 terminal behaves similar to a LTE Rel-8 terminal. However, upon successful connection to the network a Rel-10 terminal may, depending on its own capabilities and the network, be configured with additional serving cells in the UL and DL. Configuration is based on RRC. Due to the heavy signaling and rather slow speed of RRC signaling it is envisioned that a terminal may be configured with multiple serving cells even though not all of them are currently used.

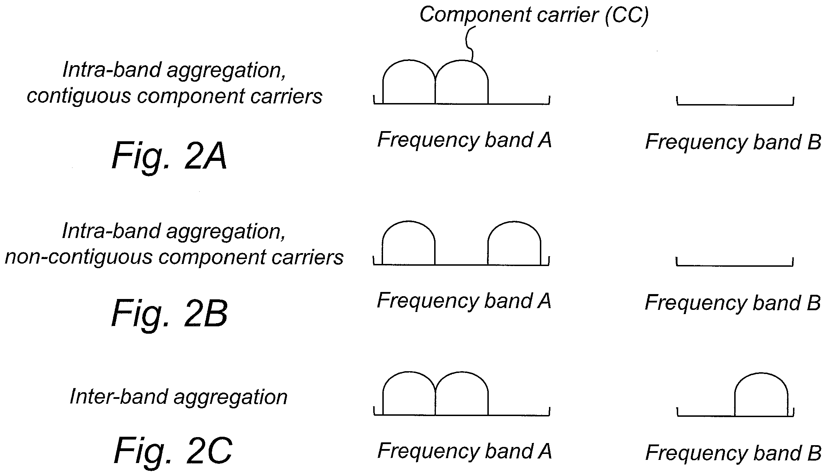

Different deployment scenarios for carrier aggregation in relation to frequency bands and the placement of cells within frequency bands are schematically shown in FIGs. 2A-C.

The different variations include i) intra-band aggregation, contiguous component carriers (Fig. 2A), ii) intra-band aggregation, non-contiguous component carriers (FIG. 2B) and iii) inter-band aggregation (FIG. 2C).

To summarize, carrier aggregation supports efficient use of multiple carriers, allowing data to be sent/received over several carriers. Carrier aggregation enables selection of one or more secondary serving cells, in addition to providing a primary serving cell.

In this context, there is usually a need to minimize the number of secondary serving cells configured for each wireless communication device for battery saving purposes and/or if the wireless device supports limited number of secondary serving cells. Hence, there is a need to determine what frequency band or bands to use for the secondary serving cell(s), especially when there is a desire to minimize the total number of secondary cells and/or there is a limited number of secondary serving cells supported in a wireless device such as a UE.

Hence, it is a complex problem to provide efficient secondary serving cell selection when operating carrier aggregation with possibly different frequency bands in an indoor radio system that may suffer from dominance problems because of a neighboring base station.

WO 2015/114594 relates to secondary serving cell selection based on geographic signatures of candidate cells and position information for a wireless device.

### SUMMARY

It is an object to provide a method of secondary serving cell selection for a wireless communication device.

Another object is to provide a device configured to perform secondary serving cell selection for a wireless communication device.

It is also an object to provide an indoor radio system comprising such a device.

Yet another object is to provide a network device comprising such a device.

Still another object is to provide a computer program for performing, when executed, secondary serving cell selection for a wireless communication device.

It is also an object to provide a computer-program product comprising a computer-readable medium having stored thereon such a computer program.

The invention is solely defined by the appended claims. In the following, references to embodiments not falling within the scope of the claims are to be understood as examples useful for understanding the invention.

These and other objects are met by embodiments of the proposed technology.

According to a first aspect, there is provided a method of secondary serving cell selection for a wireless communication device served by an indoor radio system employing carrier aggregation of component carriers to enable selection of a secondary serving cell. The indoor radio system is operating in a first set of at least one frequency band, shared with at least one neighboring base station, and a second set of at least one frequency band, unused by the at least one neighboring base station. The method comprises:
- selecting, if it is determined that there is lack of indoor dominance on one or more bands of the first set of frequency band(s), a component carrier of the second set of frequency band(s) to carry the secondary serving cell with higher priority than a component carrier of said one or more bands of the first set of frequency band(s) on which there is lack of indoor dominance; and
- selecting, if it is determined that there is indoor dominance on one or more bands of the first set of frequency band(s), a component carrier of said one or more bands of the first set of frequency band(s) on which there is indoor dominance, from the indoor radio system, to carry the secondary serving cell with higher priority than a component carrier of the second set of frequency band(s).

Basically, the second set of frequency band(s) unused by the neighboring base station is prioritized over the band or bands of the first shared set of frequency band(s) on which there is lack of indoor dominance, and the band or bands of the first shared set of frequency band(s) on which there is indoor dominance is prioritized over the second set of frequency band(s). In this way, efficient utilization of the available frequency spectrum resources can be ensured.

According to a second aspect, there is provided a device configured to perform secondary serving cell selection for a wireless communication device served by an indoor radio system employing carrier aggregation of component carriers to enable selection of a secondary serving cell. The indoor radio system is operating in a first set of at least one frequency band, shared with at least one neighboring base station, and a second set of at least one frequency band, unused by the at least one neighboring base station. The device is configured to select, if it is determined that there is lack of indoor dominance on one or more bands of the first set of frequency band(s), a component carrier of the second set of frequency band(s) to carry the secondary serving cell with higher priority than a component carrier of said one or more bands of the first set of frequency band(s) on which there is lack of indoor dominance. The device is also configured to select, if it is determined that there is indoor dominance on one or more bands of the first set of frequency band(s), a component carrier of said one or more bands of the first set of frequency band(s) on which there is indoor dominance, from the indoor radio system, to carry the secondary serving cell with higher priority than a component carrier of the second set of frequency band(s).

According to a third aspect, there is provided an indoor radio system comprising a device according to the second aspect.

According to a fourth aspect, there is provided a network device comprising a device according to the second aspect.

By way of example, the network device may be part of a centralized radio access network deployment or a cloud-based network device.

According to a fifth aspect, there is provided a computer program for performing, when executed, secondary serving cell selection for a wireless communication device served by an indoor radio system employing carrier aggregation of component carriers to enable selection of secondary serving cell. The indoor radio system is operating in a first set of at least one frequency band, shared with at least one neighboring base station, and a second set of at least one frequency band, unused by the at least one neighboring base station. The computer program comprises instructions, which when executed by at least one processor, cause the at least one processor to:
- select, if it is determined that there is lack of indoor dominance on one or more bands of the first set of frequency band(s), a component carrier of the second set of frequency band(s) to carry the secondary serving cell with higher priority than a component carrier of said one or more bands of the first set of frequency band(s) on which there is lack of indoor dominance; and
- select, if it is determined that there is indoor dominance on one or more bands of the first set of frequency band(s), a component carrier of said one or more bands of the first set of frequency band(s) on which there is indoor dominance, from the indoor radio system, to carry the secondary serving cell with higher priority than a component carrier of the second set of frequency band(s).

According to a sixth aspect, there is provided a computer-program product comprising a computer-readable medium having stored thereon a computer program according to the fifth aspect.

According to a seventh aspect, there is provided an apparatus for secondary serving cell selection for a wireless communication device served by an indoor radio system employing carrier aggregation of component carriers to enable selection of secondary serving cell. The indoor radio system is operating in a first set of at least one frequency band, shared with at least one neighboring base station, and a second set of at least one frequency band, unused by the at least one neighboring base station. The apparatus comprises a selection module for:
- selecting, if it is determined that there is lack of indoor dominance on one or more bands of the first set of frequency band(s), a component carrier of the second set of frequency band(s) to carry the secondary serving cell with higher priority than a component carrier of said one or more bands of the first set of frequency band(s) on which there is lack of indoor dominance; and
- selecting, if it is determined that there is indoor dominance on one or more bands of the first set of frequency band(s), a component carrier of said one or more bands of the first set of frequency band(s) on which there is indoor dominance, from the indoor radio system, to carry the secondary serving cell with higher priority than a component carrier of the second set of frequency band(s).

Other advantages will be appreciated when reading the detailed description.

### BRIEF DESCRIPTION OF THE DRAWINGS

The embodiments, together with further objects and advantages thereof, may best be understood by making reference to the following description taken together with the accompanying drawings, in which:
FIG. 1 is a schematic diagram illustrating an example of the problem of lack of indoor dominance in an indoor radio system due to a neighboring base station.
FIGs. 2A-C are schematic diagrams illustrating examples of different types of carrier aggregation.
FIG. 3 is a schematic flow diagram illustrating an example of a method of secondary serving cell selection for a wireless communication device according to an embodiment.
FIG. 4 is a schematic diagram illustrating an example of two different sets of frequency bands in which the indoor radio system is operating, a first set shared with at least one neighboring base station, and a second set unused by the at least one neighboring base station.
FIG. 5 is a schematic diagram illustrating an example of two different scenarios for secondary serving cell selection, involving lack of indoor dominance and indoor dominance, respectively, according to an embodiment.
FIG. 6 is a schematic diagram illustrating an example of two different scenarios for selection of both primary serving cell and secondary serving cell, involving lack of indoor dominance and indoor dominance, respectively, according to an embodiment.
FIG. 7 is a schematic diagram illustrating another example of two different scenarios for selection of both primary serving cell and secondary serving cell, involving lack of indoor dominance and indoor dominance, respectively, according to an embodiment.
FIG. 8 is a schematic block diagram illustrating an example of a device configured to perform secondary serving cell selection according to an embodiment.
FIG. 9 is a schematic diagram illustrating an example of a computer implementation according to an embodiment.
FIG. 10 is a schematic block diagram illustrating an example of an indoor system comprising a device for secondary serving cell selection according to an embodiment.
FIG. 11 is a schematic block diagram illustrating an example of a network device comprising a device for secondary serving cell selection according to an embodiment.
FIG. 12 is a schematic diagram illustrating an example of an apparatus for secondary serving cell selection according to an embodiment.

### DETAILED DESCRIPTION

Throughout the drawings, the same reference designations are used for similar or corresponding elements.

As used herein, the non-limiting terms "wireless communication device" may for example refer to User Equipment (UE), a terminal, a mobile phone, a cellular phone, a Personal Digital Assistant (PDA), equipped with radio communication capabilities, a smart phone, a laptop or Personal Computer (PC), equipped with an internal or external mobile broadband modem, a tablet with radio communication capabilities, a target device, a device to device UE, a machine type UE or UE capable of machine to machine communication, Customer Premises Equipment (CPE), Laptop Embedded Equipment (LEE), Laptop Mounted Equipment (LME), USB dongle, a portable electronic radio communication device, a sensor device equipped with radio communication capabilities or the like. In particular, the term "wireless communication device" should be interpreted as non-limiting terms comprising any type of wireless device communicating with a network node in a wireless communication system and/or possibly communicating directly with another wireless communication device. In other words, a wireless communication device may be any device equipped with circuitry for wireless communication according to any relevant standard for communication.

As used herein, the non-limiting term "network node" may refer to base stations, access points, network control nodes such as network controllers, radio network controllers, base station controllers, access controllers, and the like. In particular, the term "base station" may encompass different types of radio base stations including standardized base station functions such as Node Bs, or evolved Node Bs (eNBs), and also macro/micro/pico radio base stations, home base stations, also known as femto base stations, relay nodes, repeaters, radio access points, Base Transceiver Stations (BTSs), and even radio control nodes controlling one or more Remote Radio Units (RRUs), or the like.

As used herein, the non-limiting term "indoor radio system" may refer to any radio access system adapted or suitable for an indoor environment, including but not limited to DAS, active DAS, optical repeater and RDS systems.

As used herein, the term "network device" may refer to any device located in connection with a communication network, including but not limited to devices in access networks, core networks and similar network structures. The term network device may also encompass cloud-based network devices.

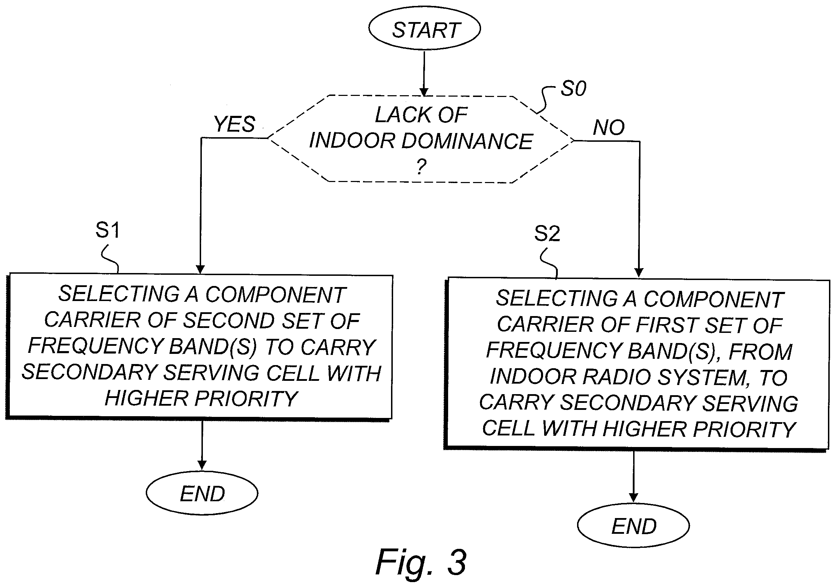

FIG. 3 is a schematic flow diagram illustrating an example of a method of secondary serving cell selection for a wireless communication device according to an embodiment.

The wireless communication device is served by an indoor radio system employing carrier aggregation of component carriers to enable selection of a secondary serving cell. The indoor radio system is operating in a first set of at least one frequency band, shared with at least one neighboring base station, and a second set of at least one frequency band, unused by the at least one neighboring base station.

Basically, the method comprises:
S1: selecting, if it is determined that there is lack of indoor dominance on one or more bands of the first set of frequency band(s), a component carrier of the second set of frequency band(s) to carry the secondary serving cell with higher priority than a component carrier of said one or more bands of the first set of frequency band(s) on which there is lack of indoor dominance; and
S2: selecting, if it is determined that there is indoor dominance on one or more bands of the first set of frequency band(s), a component carrier of the one or more bands of the first set of frequency band(s) on which there is indoor dominance, from the indoor radio system, to carry the secondary serving cell with higher priority than a component carrier of the second set of frequency band(s).

Basically, the second set of frequency band(s) unused by the neighboring base station is prioritized over the band or bands of the first shared set of frequency band(s) on which there is lack of indoor dominance, and the band or bands of the first shared set of frequency band(s) on which there is indoor dominance is prioritized over the second set of frequency band(s). In this way, efficient utilization of the available frequency spectrum resources can be ensured.

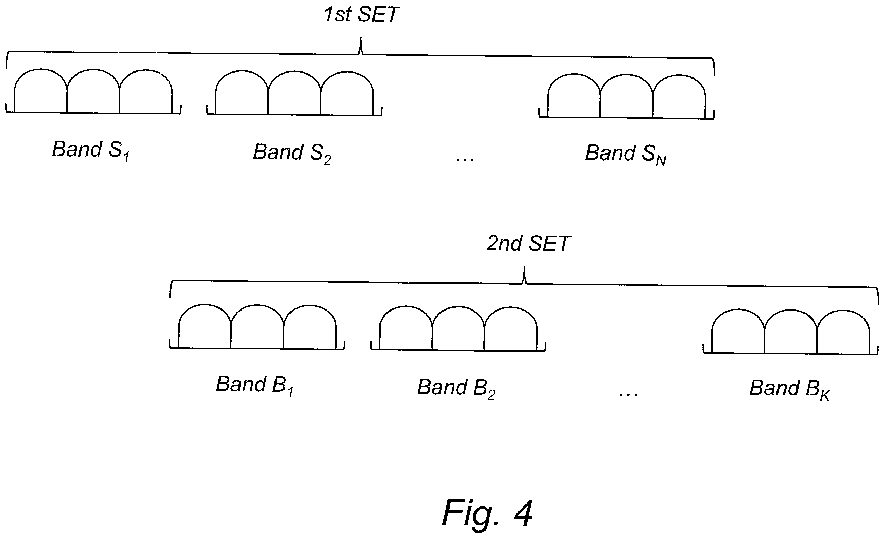

FIG. 4 is a schematic diagram illustrating an example of two different sets of frequency bands in which the indoor radio system is operating, a first set shared with at least one neighboring base station, and a second set unused by the at least one neighboring base station. The first shared set of frequency bands includes bands S₁, S₂, ..., S_{N}, where N is an integer equal to or greater than 1. The second set of frequency bands, not used by the neighboring base station, includes bands B₁, B₂, ..., B_{K}, where K is an integer equal to or greater than 1. In a particular example, the integers N and/or K are greater than 1.

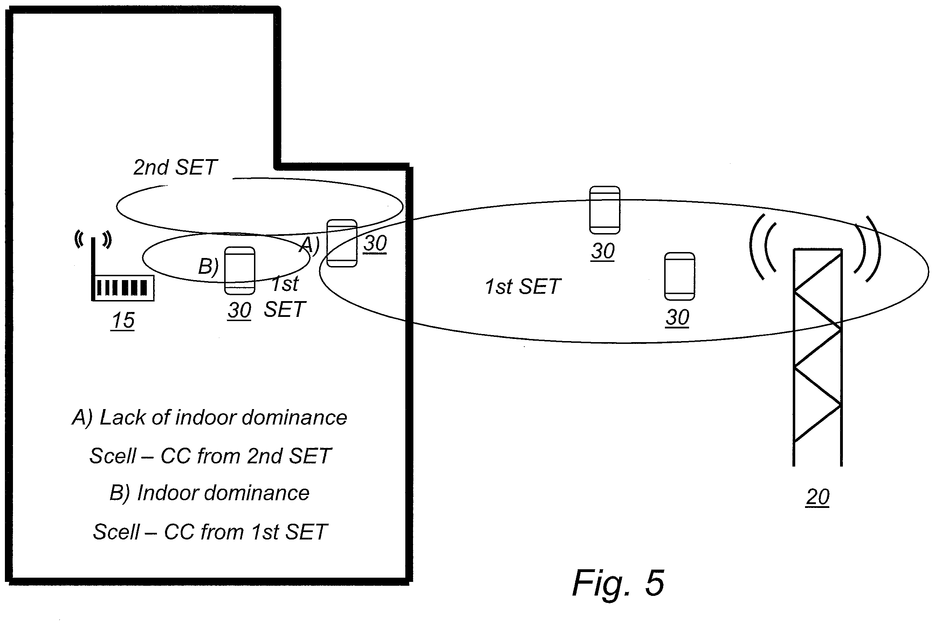

FIG. 5 is a schematic diagram illustrating an example of two different scenarios for secondary serving cell selection, involving lack of indoor dominance and indoor dominance, respectively, according to an embodiment. In the first scenario, denoted A), there is lack of indoor dominance for the wireless communication device 30, and a CC from the second set is selected as SCell with high priority. In the second scenario, denoted B), there is indoor dominance for the wireless communication device 30, and a CC from the first set is selected as SCell with high priority.

By way of example, the second set of frequency band(s) may be a set of frequency band(s) in unlicensed spectrum and/or a set of indoor frequency band(s). The latter set of so-called indoor frequency band(s) may be a set of one or more bands that is/are not practically used outdoors and/or a set of one or more bands dedicated for indoor use.

Indoor deployments can thus for example operate under partial dominance using unlicensed spectrum which reduces cost since the number of indoor nodes needed are fewer than would be needed for a full dominance deployment. Also, high indoor capacity can be maintained without negatively affecting the surrounding macro capacity.

For example, it may be important to make sure that unlicensed spectrum and/or indoor spectrum is/are used, and has sufficient capacity, for users in areas with dominance problems and that the unlicensed spectrum and/or indoor spectrum is/are not wasted in areas without dominance problems. In the same way, it is important to use shared or licensed spectrum in areas without dominance problems since it is normally most efficient to use in such areas. The proposed technology may provide proper load balancing between different sets of frequency bands, such as licensed and unlicensed bands. In particular, the proposed technology may secure that unlicensed spectrum resources are available in areas with dominance problems when a wireless communication device such as a UE operates with a limited number of secondary serving cells.

As mentioned, it may be noted that the unlicensed frequency band(s) could generally be replaced, at least partially, by a frequency band not deployed outdoor. It could for example include parts of the 3.5 GHz band in the US where the co-existence with radar and satellite systems and maximum allowed power in this band makes it in practice only used in indoor locations. In a similar way, band 40 (2.3 GHz) in China is another example of an indoor only band.

In a particular example, if it is determined that there is lack of indoor dominance on each band of the first set of frequency band(s), a component carrier of the second set of frequency band(s) is selected to carry the secondary serving cell. On the other hand, if it is determined that there is indoor dominance on one or more bands of the first set of frequency band(s), a component carrier of the one or more bands of the first set of frequency band(s) on which there is indoor dominance is selected to carry the secondary serving cell.

Optionally, the step of selecting a component carrier of the second set of frequency band(s) may comprise selecting a component carrier of a licensed frequency band of the second set with higher priority than an unlicensed frequency band of the second set.

With reference once again to the schematic diagram of FIG. 3, the method may optionally be regarded as further comprising the following pre-step:
S0: determining whether there is indoor dominance or lack of indoor dominance at least partly based on signal measurements on one or more bands of the first set of frequency band(s) performed by the wireless communication device.

For example, it may be determined that there is lack of indoor dominance on the one or more bands of the first set of frequency band(s) when a signal on the one or more bands of the first set of frequency band(s) from the neighboring base station is stronger than a signal on the one or more bands of the first set of frequency band(s) from the indoor radio system, as measured by the wireless communication device.

Similarly, it may be determined that there is indoor dominance on the one or more bands of first set of frequency band(s) when a signal on the one or more bands of the first set of frequency band(s) from the neighboring base station is weaker than a signal on the one or more bands of the first set of frequency band(s) from the indoor radio system, as measured by the wireless communication device.

As an example, the indoor radio system may be an indoor base station, and the at least one neighboring base station may be an outdoor base station.

For example, the method may be performed by the indoor radio system or a network device in connection with the indoor radio system. In the latter case, the second serving cell selection may be performed in the network device and communicated to the indoor radio system.

By way of example, the network device may be part of a centralized radio access network deployment or a cloud-based network device.

It should be understood that the wireless communication device is assigned a primary serving cell, typically served by the indoor radio system but possibly served by the macro base station. The indoor radio system is therefore enabled for operating a primary serving cell for the wireless communication device, and for employing carrier aggregation of component carriers to enable secondary serving cell selection.

In the following, the proposed technology will be described with reference to non-limiting examples.

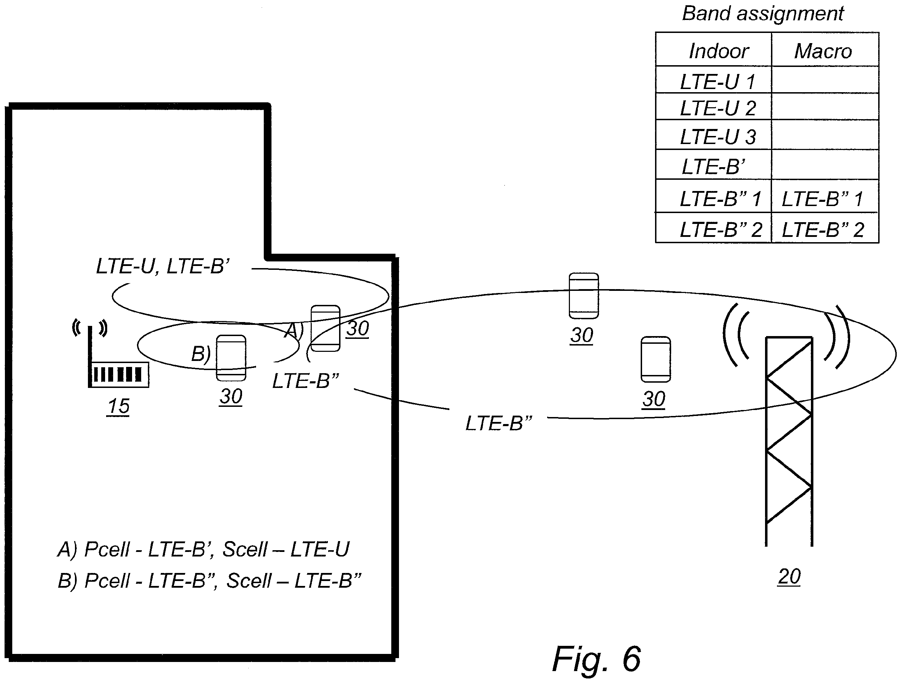

FIG. 6 is a schematic diagram illustrating an example of two different scenarios for selection of both primary serving cell and secondary serving cell, involving lack of indoor dominance and indoor dominance, respectively, according to an embodiment.

For the configuration as shown in FIG. 6, the Scell allocation is performed in the indoor radio system 15. When a CC of a frequency band denoted LTE-B' is used as primary serving cell (point A) in FIG. 6, a CC of a set of one or more unlicensed bands denoted LTE-U 1, ... LTE-U 3 is assigned as Scell with highest priority since the wireless communication device 30 such as a UE will suffer from dominance problem on the set of shared bands denoted LTE-B" (and LTE-B' is narrow band and used only for control plane to not waste licensed spectrum only used in the indoor radio system). When a CC of the set of bands LTE-B" is used as primary serving cell (point B) in FIG. 6, a CC of the set of unlicensed band(s) LTE-U 1, ..., LTE-U 3 is assigned as Scell with lower priority to save unlicensed resources for the area with dominance problem (also there is no dominance problem so the set of bands LTE-B" is well suited for data transmissions). Other carriers of the set of bands LTE-B" are hence allocated as SCell with higher priority. In this case the LTE-B' is not used at all (as the purpose was to minimize the usage of it) or it is assigned as Scell with lower/lowest priority.

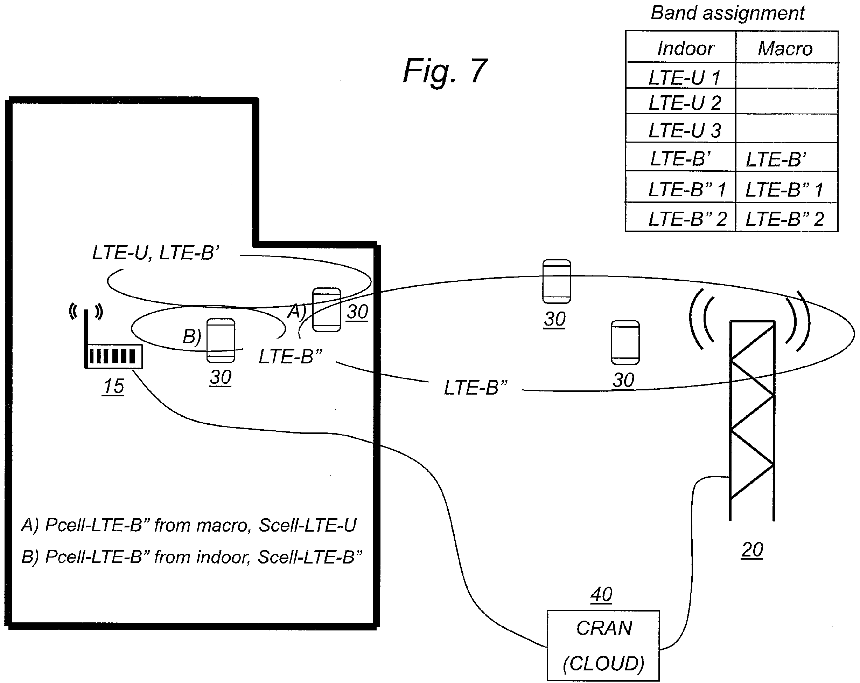

FIG. 7 is a schematic diagram illustrating another example of two different scenarios for selection of both primary serving cell and secondary serving cell, involving lack of indoor dominance and indoor dominance, respectively, according to an embodiment.

For the configuration as shown in FIG. 7, the Scell allocation is performed in the network device 40, which may for example be part of a Centralized RAN, CRAN or a cloud-based device. When a CC of the set of bands LTE-B", from macro base station 20, is used as primary serving cell (point A) in FIG. 7, a CC of the set of unlicensed band(s) LTE-U 1, ..., LTE-U 3 is assigned as Scell with highest priority since UE will suffer from dominance problem on LTE-B". When a CC of set of bands LTE-B", from the indoor base station 15, is used as primary serving cell (point B) in FIG. 7, a CC of the set of unlicensed band(s) LTE-U 1, ..., LTE-U 3 is assigned as Scell with lower priority to save unlicensed resources for the area with dominance problem (also there is no dominance problem so LTE-B" is well suited for data transmissions). Therefore, other carriers of the set of bands LTE-B" are hence allocated as SCell with higher priority.

As can be seen from these examples, the primary serving cell may be operated from the indoor radio system or the neighboring macro base station.

For a better understanding it may be useful to consider a particular non-limiting example. Considering an example with a first set of frequency bands, 700 MHz and 2120 MHz used by both the indoor radio system and the neighboring macro base station, and a second set of frequency bands 2130 MHz and 5000 MHz used only by the indoor radio system.

If there is indoor dominance on the 2120 MHz band of the first set, and there is lack of indoor dominance on the 700 MHz band of the first set, the priority order for secondary serving cell selection may for example look like this:
1) 2120 MHz (indoor dominance)
2) 2130/5000 MHz
3) 700 MHz (lack of indoor dominance).

Further, if the 2130 MHz band is licensed and the 5000 MHz band is unlicensed, the priority order for secondary serving cell selection may for example look like this:
1) 2120 MHz (indoor dominance)
2) 2130 MHz
3) 5000 MHz
4) 700 MHz (lack of indoor dominance).

It will be appreciated that the methods and arrangements described herein can be implemented, combined and re-arranged in a variety of ways.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Alternatively, or as a complement, at least some of the steps, functions, procedures, modules and/or blocks described herein may be implemented in software such as a computer program for execution by suitable processing circuitry such as one or more processors or processing units.

Examples of processing circuitry includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

It should also be understood that it may be possible to re-use the general processing capabilities of any conventional device or unit in which the proposed technology is implemented. It may also be possible to re-use existing software, e.g. by reprogramming of the existing software or by adding new software components. According to an aspect of the proposed technology there is provided a device configured to perform secondary serving cell selection for a wireless communication device served by an indoor radio system employing carrier aggregation of component carriers to enable selection of a secondary serving cell. The indoor radio system is operating in a first set of at least one frequency band, shared with at least one neighboring base station, and a second set of at least one frequency band, unused by the at least one neighboring base station. The device is configured to select, if it is determined that there is lack of indoor dominance on one or more bands of the first set of frequency band(s), a component carrier of the second set of frequency band(s) to carry the secondary serving cell with higher priority than a component carrier of said one or more bands of the first set of frequency band(s) on which there is lack of indoor dominance. The device is also configured to select, if it is determined that there is indoor dominance on one or more bands of the first set of frequency band(s), a component carrier of said one or more bands of the first set of frequency band(s) on which there is indoor dominance, from the indoor radio system, to carry the secondary serving cell with higher priority than a component carrier of the second set of frequency band(s).

By way of example, the device may be configured to perform secondary serving cell selection based on the second set of frequency band(s) being a set of frequency band(s) in unlicensed spectrum and/or a set of indoor frequency band(s).

In a particular example, the device is configured to select, if it is determined that there is lack of indoor dominance on each band of the first set of frequency band(s), a component carrier of the second set of frequency band(s) to carry the secondary serving cell. The device is further configured to select, if it is determined that there is indoor dominance on one or more bands of the first set of frequency band(s), a component carrier of said one or more bands of the first set of frequency band(s), on which there is indoor dominance, to carry the secondary serving cell.

As an example, the device may be configured to select a component carrier of the second set of frequency band(s) by selecting a component carrier of a licensed frequency band of the second set with higher priority than an unlicensed frequency band of the second set.

In another example, the device may configured to determine whether there is indoor dominance or lack of indoor dominance at least partly based on signal measurements on one or more bands of the first set of frequency band(s) performed by the wireless communication device.

For example, the device may be configured to determine that there is lack of indoor dominance on said one or more bands of the first set of frequency band(s) when a signal on said one or more bands of the first set of frequency band(s) from the neighboring base station is stronger than a signal on said one or more bands of the first set of frequency band(s) from the indoor base station as measured by the wireless communication device.
Similarly, the device may be configured to determine that there is indoor dominance on said one or more bands of the first set of frequency band(s) when a signal on said one or more bands of the first set of frequency band(s) from the neighboring base station is weaker than a signal on said one or more bands of the first set of frequency band(s) from the indoor base station as measured by the wireless communication device.

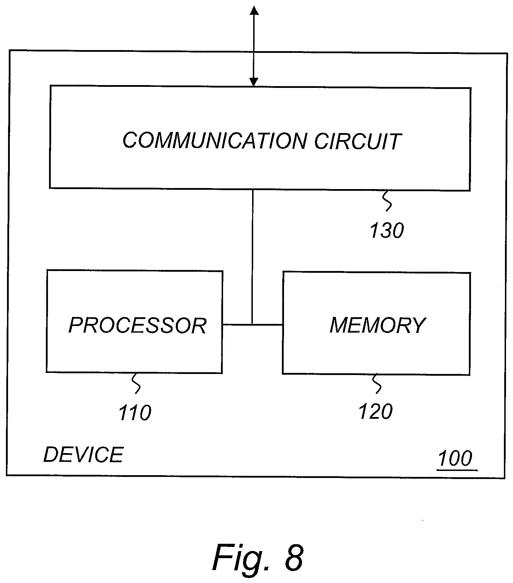

FIG. 8 is a schematic block diagram illustrating an example of a device 100 configured to perform secondary serving cell selection according to an embodiment. In this particular example, the device 100 is based on a processor-memory implementation and comprises a processor 110 and a memory 120, the memory 120 comprising instructions executable by the processor 110, whereby the processor 110 is operative to perform secondary serving cell selection.

Optionally, the device 100 may also include a communication circuit 130. The communication circuit 130 may include functions for wired and/or wireless communication with other devices and/or network nodes in the network. In a particular example, the communication circuit 130 may be based on radio circuitry for communication with one or more other nodes, including transmitting and/or receiving information. The communication circuit 130 may be interconnected to the processor 110 and/or memory 120. By way of example, the communication circuit 130 may include any of the following: a receiver, a transmitter, a transceiver, input/output (I/O) circuitry, input port(s) and/or output port(s).

It is also possible to provide a solution based on a combination of hardware and software. The actual hardware-software partitioning can be decided by a system designer based on a number of factors including processing speed, cost of implementation and other requirements.

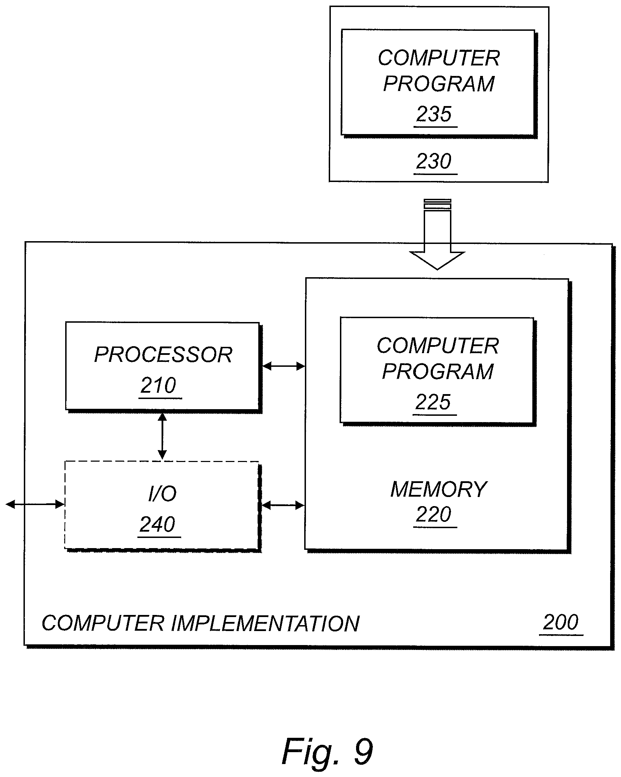

FIG. 9 is a schematic diagram illustrating an example of a computer implementation 200 according to an embodiment. In this particular example, at least some of the steps, functions, procedures, modules and/or blocks described herein are implemented in a computer program 225; 235, which is loaded into the memory 220 for execution by processing circuitry including one or more processors 210. The processor(s) 210 and memory 220 are interconnected to each other to enable normal software execution. An optional input/output device 240 may also be interconnected to the processor(s) 210 and/or the memory 220 to enable input and/or output of relevant data such as input parameter(s) and/or resulting output parameter(s).

The term 'processor' should be interpreted in a general sense as any system or device capable of executing program code or computer program instructions to perform a particular processing, determining or computing task.

The processing circuitry including one or more processors 210 is thus configured to perform, when executing the computer program 225, well-defined processing tasks such as those described herein.

The processing circuitry does not have to be dedicated to only execute the above-described steps, functions, procedure and/or blocks, but may also execute other tasks.

In a particular embodiment, there is provided a computer program 225; 235 for performing, when executed, secondary serving cell selection for a wireless communication device 30 served by an indoor radio system 15 employing carrier aggregation of component carriers to enable selection of secondary serving cell, the indoor radio system 15 operating in a first set of at least one frequency band, shared with at least one neighboring base station 20, and a second set of at least one frequency band, unused by the at least one neighboring base station 20.

The computer program 225; 235 comprises instructions, which when executed by at least one processor 210, cause the processor(s) to:
- select, if it is determined that there is lack of indoor dominance on one or more bands of the first set of frequency band(s), a component carrier of the second set of frequency band(s) to carry the secondary serving cell with higher priority than a component carrier of said one or more bands of the first set of frequency band(s) on which there is lack of indoor dominance; and
- select, if it is determined that there is indoor dominance on one or more bands of the first set of frequency band(s), a component carrier of said one or more bands of the first set of frequency band(s) on which there is indoor dominance, from the indoor radio system, to carry the secondary serving cell with higher priority than a component carrier of the second set of frequency band(s).

The proposed technology also provides a carrier comprising the computer program, wherein the carrier is one of an electronic signal, an optical signal, an electromagnetic signal, a magnetic signal, an electric signal, a radio signal, a microwave signal, or a computer-readable storage medium.

By way of example, the software or computer program 225; 235 may be realized as a computer program product, which is normally carried or stored on a computer-readable medium 220; 230, in particular a non-volatile medium. The computer-readable medium may include one or more removable or non-removable memory devices including, but not limited to a Read-Only Memory (ROM), a Random Access Memory (RAM), a Compact Disc (CD), a Digital Versatile Disc (DVD), a Blu-ray disc, a Universal Serial Bus (USB) memory, a Hard Disk Drive (HDD) storage device, a flash memory, a magnetic tape, or any other conventional memory device. The computer program may thus be loaded into the operating memory of a computer or equivalent processing device for execution by the processing circuitry thereof.

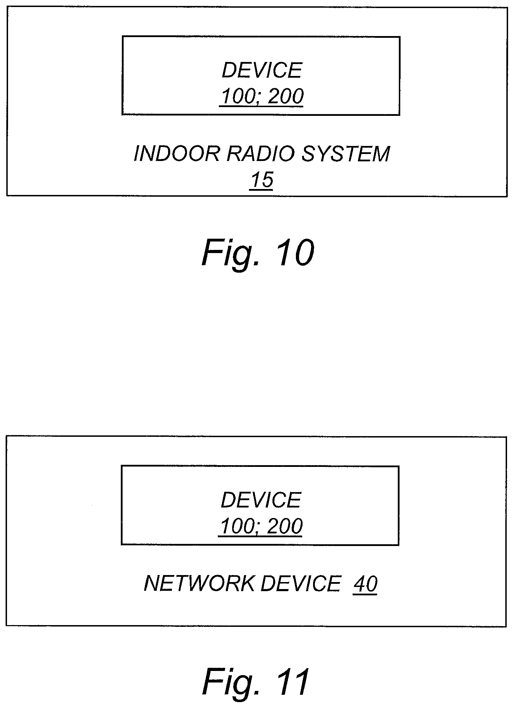

FIG. 10 is a schematic block diagram illustrating an example of an indoor system comprising a device for secondary serving cell selection according to an embodiment. The indoor radio system 15 comprises a device 100; 200 as described herein.

FIG. 11 is a schematic block diagram illustrating an example of a network device comprising a device for secondary serving cell selection according to an embodiment. The network device 40 comprises a device 100; 200 as described herein.

The network device may be any suitable network device in the wireless communication system, or a network device in connection with the wireless communication system. By way of example, the network device 40 may be part of a centralized radio access network deployment or a cloud-based network device.

The flow diagram or diagrams presented herein may be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

The computer program residing in memory may thus be organized as appropriate function modules configured to perform, when executed by the processor, at least part of the steps and/or tasks described herein.

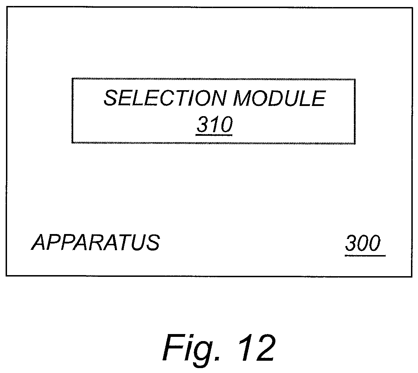

FIG. 12 is a schematic diagram illustrating an example of an apparatus for secondary serving cell selection according to an embodiment. The apparatus 300 for secondary serving cell selection for a wireless communication device served by an indoor radio system employing carrier aggregation of component carriers to enable selection of secondary serving cell, the indoor radio system operating in a first set of at least one frequency band, shared with at least one neighboring base station, and a second set of at least one frequency band, unused by the at least one neighboring base station. The apparatus 300 comprises a selection module 310 for:
- selecting, if it is determined that there is lack of indoor dominance on one or more bands of the first set of frequency band(s), a component carrier of the second set of frequency band(s) to carry the secondary serving cell with higher priority than a component carrier of said one or more bands of the first set of frequency band(s) on which there is lack of indoor dominance; and
- selecting, if it is determined that there is indoor dominance on one or more bands of the first set of frequency band(s), a component carrier of said one or more bands of the first set of frequency band(s) on which there is indoor dominance, from the indoor radio system, to carry the secondary serving cell with higher priority than a component carrier of the second set of frequency band(s).

Alternatively it is possible to realize the module in FIG. 12 predominantly by hardware modules, or alternatively by hardware, with suitable interconnections between relevant modules. Particular examples include one or more suitably configured digital signal processors and other known electronic circuits, e.g. discrete logic gates interconnected to perform a specialized function, and/or Application Specific Integrated Circuits (ASICs) as previously mentioned. Other examples of usable hardware include input/output (I/O) circuitry and/or circuitry for receiving and/or sending signals. The extent of software versus hardware is purely implementation selection.

It is becoming increasingly popular to provide computing services (hardware and/or software) in network devices such as network nodes and/or servers where the resources are delivered as a service to remote locations over a network. By way of example, this means that functionality, as described herein, can be distributed or re-located to one or more separate physical nodes or servers. The functionality may be re-located or distributed to one or more jointly acting physical and/or virtual machines that can be positioned in separate physical node(s), i.e. in the so-called cloud. This is sometimes also referred to as cloud computing, which is a model for enabling ubiquitous on-demand network access to a pool of configurable computing resources such as networks, servers, storage, applications and general or customized services.

There are different forms of virtualization that can be useful in this context, including one or more of:
- Consolidation of network functionality into virtualized software running on customized or generic hardware. This is sometimes referred to as network function virtualization.
- Co-location of one or more application stacks, including operating system, running on separate hardware onto a single hardware platform. This is sometimes referred to as system virtualization, or platform virtualization.
- Co-location of hardware and/or software resources with the objective of using some advanced domain level scheduling and coordination technique to gain increased system resource utilization. This is sometimes referred to as resource virtualization, or centralized and coordinated resource pooling.

Although it may often desirable to centralize functionality in so-called generic data centers, in other scenarios it may in fact be beneficial to distribute functionality over different parts of the network.

A network device, such as any of those already mentioned herein, may generally be seen as an electronic device being communicatively connected to other electronic devices in the network.

By way of example, the network device may be implemented in hardware, software or a combination thereof. For example, the network device may be a special-purpose network device or a general purpose network device, or a hybrid thereof.

A special-purpose network device may use custom processing circuits and a proprietary operating system (OS), for execution of software to provide one or more of the features or functions disclosed herein.

A general purpose network device may use common off-the-shelf (COTS) processors and a standard OS, for execution of software configured to provide one or more of the features or functions disclosed herein.

By way of example, a special-purpose network device may include hardware comprising processing or computing resource(s), which typically include a set of one or more processors, and physical network interfaces (NIs), which sometimes are called physical ports, as well as non-transitory machine readable storage media having stored thereon software. A physical NI may be seen as hardware in a network device through which a network connection is made, e.g. wirelessly through a wireless network interface controller (WNIC) or through plugging in a cable to a physical port connected to a network interface controller (NIC). During operation, the software may be executed by the hardware to instantiate a set of one or more software instance(s). Each of the software instance(s), and that part of the hardware that executes that software instance, may form a separate virtual network element.

By way of another example, a general purpose network device may for example include hardware comprising a set of one or more processor(s), often COTS processors, and network interface controller(s) (NICs), as well as non-transitory machine readable storage media having stored thereon software. During operation, the processor(s) executes the software to instantiate one or more sets of one or more applications. While one embodiment does not implement virtualization, alternative embodiments may use different forms of virtualization - for example represented by a virtualization layer and software containers. For example, one such alternative embodiment implements operating system-level virtualization, in which case the virtualization layer represents the kernel of an operating system (or a shim executing on a base operating system) that allows for the creation of multiple software containers that may each be used to execute one of a sets of applications. In an example embodiment, each of the software containers (also called virtualization engines, virtual private servers, or jails) is a user space instance (typically a virtual memory space). These user space instances may be separate from each other and separate from the kernel space in which the operating system is executed; the set of applications running in a given user space, unless explicitly allowed, cannot access the memory of the other processes. Another such alternative embodiment implements full virtualization, in which case: 1) the virtualization layer represents a hypervisor (sometimes referred to as a Virtual Machine Monitor (VMM)) or the hypervisor is executed on top of a host operating system; and 2) the software containers each represent a tightly isolated form of software container called a virtual machine that is executed by the hypervisor and may include a guest operating system.

A hypervisor is the software/hardware that is responsible for creating and managing the various virtualized instances and in some cases the actual physical hardware. The hypervisor manages the underlying resources and presents them as virtualized instances. What the hypervisor virtualizes to appear as a single processor may actually comprise multiple separate processors. From the perspective of the operating system, the virtualized instances appear to be actual hardware components.

A virtual machine is a software implementation of a physical machine that runs programs as if they were executing on a physical, non-virtualized machine; and applications generally do not know they are running on a virtual machine as opposed to running on a "bare metal" host electronic device, though some systems provide para-virtualization which allows an operating system or application to be aware of the presence of virtualization for optimization purposes.

The instantiation of the one or more sets of one or more applications as well as the virtualization layer and software containers if implemented, are collectively referred to as software instance(s). Each set of applications, corresponding software container if implemented, and that part of the hardware that executes them (be it hardware dedicated to that execution and/or time slices of hardware temporally shared by software containers), forms a separate virtual network element(s).

The virtual network element(s) may perform similar functionality compared to Virtual Network Element(s) (VNEs). This virtualization of the hardware is sometimes referred to as Network Function Virtualization (NFV)). Thus, NFV may be used to consolidate many network equipment types onto industry standard high volume server hardware, physical switches, and physical storage, which could be located in data centers, NDs, and Customer Premise Equipment (CPE). However, different embodiments may implement one or more of the software container(s) differently. For example, while embodiments are illustrated with each software container corresponding to a VNE, alternative embodiments may implement this correspondence or mapping between software container-VNE at a finer granularity level; it should be understood that the techniques described herein with reference to a correspondence of software containers to VNEs also apply to embodiments where such a finer level of granularity is used.

According to yet another embodiment, there is provided a hybrid network device, which includes both custom processing circuitry/proprietary OS and COTS processors/standard OS in a network device, e.g. in a card or circuit board within a network device ND. In certain embodiments of such a hybrid network device, a platform Virtual Machine (VM), such as a VM that implements functionality of a special-purpose network device, could provide for para-virtualization to the hardware present in the hybrid network device.

The invention is solely defined by the appended claims.

## Claims

1. A method of secondary serving cell selection for a wireless communication device (30) served by an indoor radio system (15) employing carrier aggregation of component carriers to enable selection of a secondary serving cell, the indoor radio system (15) operating in a first set of at least one frequency band, shared with at least one neighboring base station (20), and a second set of at least one frequency band, unused by the at least one neighboring base station (20), wherein said method comprises:
- selecting (S1), if it is determined that there is lack of indoor dominance on one or more bands of the first set of frequency band(s), a component carrier of the second set of frequency band(s) to carry the secondary serving cell with higher priority than a component carrier of said one or more bands of the first set of frequency band(s) on which there is lack of indoor dominance; wherein a lack of indoor dominance occurs when the neighboring base station provides a stronger signal than the indoor radio system, and
- selecting (S2), if it is determined that there is indoor dominance on one or more bands of the first set of frequency band(s), a component carrier of said one or more bands of the first set of frequency band(s) on which there is indoor dominance, from the indoor radio system, to carry the secondary serving cell with higher priority than a component carrier of the second set of frequency band(s), wherein indoor dominance occurs when the indoor radio system provides a stronger signal than the neighboring base station.

2. The method of claim 1, wherein the second set of frequency band(s) is a set of frequency band(s) in unlicensed spectrum and/or a set of indoor frequency band(s).

3. The method of claim1 or 2, wherein, if it is determined that there is lack of indoor dominance on each band of the first set of frequency band(s), a component carrier of the second set of frequency band(s) is selected to carry the secondary serving cell; and
wherein, if it is determined that there is indoor dominance on one or more bands of the first set of frequency band(s), a component carrier of said one or more bands of the first set of frequency band(s) on which there is indoor dominance is selected to carry the secondary serving cell.

4. The method of any of the claims 1 to 3, wherein the step of selecting a component carrier of the second set of frequency band(s) comprises selecting a component carrier of a licensed frequency band of the second set with higher priority than an unlicensed frequency band of the second set.

5. The method of any of the claims 1 to 4, further comprising determining (S0) whether there is indoor dominance or lack of indoor dominance at least partly based on signal measurements on one or more bands of the first set of frequency band(s) performed by the wireless communication device (30).

6. The method of claim 5, wherein it is determined that there is lack of indoor dominance on said one or more bands of the first set of frequency band(s) when a signal on said one or more bands of the first set of frequency band(s) from the neighboring base station (20) is stronger than a signal on said one or more bands of the first set of frequency band(s) from the indoor radio system (15) as measured by the wireless communication device (30).

7. The method of claim 5 or 6, wherein it is determined that there is indoor dominance on said one or more bands of first set of frequency band(s) when a signal on said one or more bands of the first set of frequency band(s) from the neighboring base station (20) is weaker than a signal on said one or more bands of the first set of frequency band(s) from the indoor radio system (15) as measured by the wireless communication device (30).

8. The method of any of the claims 1 to 7, wherein the indoor radio system (15) is an indoor base station, and the at least one neighboring base station (20) is an outdoor base station.

9. The method of any of the claims 1 to 8, wherein the method is performed by the indoor radio system (15) or a network device (40) in connection with the indoor radio system.

10. The method of claim 9, wherein the network device (40) is part of a centralized radio access network deployment or a cloud-based network device.

11. A device (100; 200) configured to perform secondary serving cell selection for a wireless communication device (30) served by an indoor radio system (15) employing carrier aggregation of component carriers to enable selection of a secondary serving cell, the indoor radio system (15) operating in a first set of at least one frequency band, shared with at least one neighboring base station (20), and a second set of at least one frequency band, unused by the at least one neighboring base station (20),
wherein the device (100; 200) is configured to select, if it is determined that there is lack of indoor dominance on one or more bands of the first set of frequency band(s), a component carrier of the second set of frequency band(s) to carry the secondary serving cell with higher priority than a component carrier of said one or more bands of the first set of frequency band(s) on which there is lack of indoor dominance; wherein a lack of indoor dominance occurs when the neighboring base station provides a stronger signal than the indoor radio system, and
wherein the device (100; 200) is configured to select, if it is determined that there is indoor dominance on one or more bands of the first set of frequency band(s), a component carrier of said one or more bands of the first set of frequency band(s) on which there is indoor dominance, from the indoor radio system, to carry the secondary serving cell with higher priority than a component carrier of the second set of frequency band(s), , wherein indoor dominance occurs when the indoor radio system provides a stronger signal than the neighboring base station..

12. The device of claim 11, wherein the device (100; 200) is configured to perform secondary serving cell selection based on the second set of frequency band(s) being a set of frequency band(s) in unlicensed spectrum and/or a set of indoor frequency band(s).

13. The device of claim 11 or 12, wherein the device (100; 200) is configured to select, if it is determined that there is lack of indoor dominance on each band of the first set of frequency band(s), a component carrier of the second set of frequency band(s) to carry the secondary serving cell, and
wherein the device (100; 200) is configured to select, if it is determined that there is indoor dominance on one or more bands of the first set of frequency band(s), a component carrier of said one or more bands of the first set of frequency band(s), on which there is indoor dominance, to carry the secondary serving cell.

14. The device of any of the claims 11 to 13, wherein the device (100; 200) is configured to select a component carrier of the second set of frequency band(s) by selecting a component carrier of a licensed frequency band of the second set with higher priority than an unlicensed frequency band of the second set.

15. The device of any of the claims 11 to 14, wherein the device (100; 200) is configured to determine whether there is indoor dominance or lack of indoor dominance at least partly based on signal measurements on one or more bands of the first set of frequency band(s) performed by the wireless communication device (30).

16. The device of claim 15, wherein the device (100; 200) is configured to determine that there is lack of indoor dominance on said one or more bands of the first set of frequency band(s) when a signal on said one or more bands of the first set of frequency band(s) from the neighboring base station (20) is stronger than a signal on said one or more bands of the first set of frequency band(s) from the indoor base station (15) as measured by the wireless communication device (30).

17. The device of claim 15 or 16, wherein the device (100; 200) is configured to determine that there is indoor dominance on said one or more bands of the first set of frequency band(s) when a signal on said one or more bands of the first set of frequency band(s) from the neighboring base station (20) is weaker than a signal on said one or more bands of the first set of frequency band(s) from the indoor base station (15) as measured by the wireless communication device (30).

18. The device of any of the claims 11 to 17, wherein the device (100; 200) comprises a processor (110; 210) and memory (120; 220), said memory (120; 220) comprising instructions executable by said processor (110; 210), whereby said processor (110; 210) is operative to perform secondary serving cell selection.

19. An indoor radio system (15) comprising a device (100; 200) of any of the claims 11 to 18.

20. A network device (40) comprising a device (100; 200) of any of the claims 11 to 18.

21. The network device of claim 20, wherein the network device (40) is part of a centralized radio access network deployment or a cloud-based network device.

22. A computer program (225; 235) comprising instructions which, when the program is executed by a computer, cause the computer to carry out the method of claim 1.

23. A computer-readable medium (220; 230) comprising instructions which, when executed by a computer, cause the computer to carry out the method of claim 1.

## Patentansprüche

1. Verfahren zur Auswahl einer sekundären versorgenden Zelle für ein drahtloses Kommunikationsgerät (30), welche durch ein Innenfunksystem (15) versorgt wird, welches Trägeraggregation von Komponententrägern nutzt, um Auswahl einer sekundären versorgenden Zelle zu ermöglichen, wobei das Innenfunksystem(15) in einem ersten Satz von zumindest einem Frequenzband, welches mit zumindest einer benachbarten Basisstation (20) geteilt wird, und einem zweiten Satz von zumindest einem Frequenzband, welches nicht von der zumindest einen benachbarten Basisstation (20) verwendet wird, betrieben wird, wobei das Verfahren umfasst:
- Auswählen (S1), falls bestimmt wird, dass es einen Mangel an Innendominanz in einem oder mehreren Bändern des ersten Satzes von Frequenzband bzw. Frequenzbändern gibt, eines Komponententrägers des zweiten Satzes von Frequenzbändern, um die sekundäre versorgende Zelle mit höherer Priorität zu übertragen als einen Komponententräger des einen oder der mehreren Bänder des ersten Satzes von Frequenzbändern, in welchem es einen Mangel an Innendominanz gibt; wobei ein Mangel an Innendominanz auftritt, wenn die benachbarte Basisstation ein stärkeres Signal bereitstellt als das Innenfunksystem, und
- Auswählen (S2), falls bestimmt wird, dass es Innendominanz in einem oder mehreren Bändern des ersten Satzes von Frequenzbändern gibt, eines Komponententrägers des einen oder der mehreren Bänder des ersten Satzes von Frequenzbändern, in welchem es Innendominanz gibt, aus dem Innenfunksystem, um die sekundäre versorgende Zelle mit höherer Priorität zu übertragen als einen Komponententräger des zweiten Satzes von Frequenzbändern, wobei Innendominanz auftritt, wenn das Innenfunksystem ein stärkeres Signal bereitstellt als die benachbarte Basisstation.

2. Verfahren nach Anspruch 1, wobei der zweite Satz von Frequenzbändern ein Satz von Frequenzbändern in lizenzfreiem Spektrum und/oder ein Satz von Innenfrequenzbändern ist.

3. Verfahren nach Anspruch 1 oder 2, wobei, wenn bestimmt wird, dass es einen Mangel an Innendominanz in jedem Band des ersten Satzes von Frequenzbändern gibt, ein Komponententräger des zweiten Satzes von Frequenzbändern ausgewählt wird, um die sekundäre versorgende Zelle zu übertragen; und
wobei, falls bestimmt wird, dass es Innendominanz in einem oder mehreren Bändern des ersten Satzes von Frequenzbändern gibt, ein Komponententräger des einen oder der mehreren Bänder des ersten Satzes von Frequenzbändern, in welchen es Innendominanz gibt, ausgewählt wird, um die sekundäre versorgende Zelle zu übertragen.

4. Verfahren nach einem der Ansprüche 1 bis 3, wobei der Schritt des Auswählens eines Komponententrägers des zweiten Satzes von Frequenzbändern Auswählen eines Komponententrägers eines lizenzierten Frequenzbands des zweiten Satzes von Frequenzbändern mit höherer Priorität als ein lizenzfreies Frequenzband des zweiten Satzes umfasst.

5. Verfahren nach einem der Ansprüche 1 bis 4, weiter Bestimmen (S0), ob es Innendominanz oder Mangel an Innendominanz gibt, umfassend, zumindest teilweise auf Basis von Signalmessungen an einem oder mehreren Bändern des ersten Satzes von Frequenzbändern, durchgeführt von dem drahtlosen Kommunikationsgerät (30).

6. Verfahren nach Anspruch 5, wobei bestimmt wird, dass es Mangel an Innendominanz in dem einen oder den mehreren Bändern des ersten Satzes von Frequenzbändern gibt, wenn ein Signal in dem einen oder den mehreren Bändern des ersten Satzes von Frequenzbändern von der benachbarten Basisstation (20) stärker ist als ein Signal in dem einen oder den mehreren Bändern des ersten Satzes von Frequenzbändern von dem Innenfunksystem (15), wie von dem drahtlosen Kommunikationsgerät (30) gemessen.

7. Verfahren nach Anspruch 5 oder 6, wobei bestimmt wird, dass Innendominanz in dem einen oder den mehreren Bändern des ersten Satzes von Frequenzbändern gibt, wenn ein Signal in dem einen oder den mehreren Bändern des ersten Satzes von Frequenzbändern von der benachbarten Basisstation (20) schwächer ist als ein Signal in dem einen oder den mehreren Bändern des ersten Satzes von Frequenzbändern von dem Innenfunksystem (15), wie von dem drahtlosen Kommunikationsgerät (30) gemessen.

8. Verfahren nach einem der Ansprüche 1 bis 7, wobei das Innenfunksystem (15) eine Innenbasisstation ist, und die zumindest eine benachbarte Basisstation (20) eine Außenbasisstation ist.

9. Verfahren nach einem der Ansprüche 1 bis 8, wobei das Verfahren nach einem der Ansprüche durch ein Innenfunksystem (15) oder ein Netzwerkgerät (40) in Verbindung mit dem Innenfunksystem ausgeführt wird.

10. Verfahren nach Anspruch 9, wobei das Netzwerkgerät (40) Teil einer zentralisierten Funkzugangsnetzwerkbereitstellung oder eines cloudbasierten Netzwerkgeräts ist.

11. Gerät (100; 200), welches konfiguriert ist, Auswahl einer sekundären versorgenden Zelle für ein drahtlosen Kommunikationsgerät (30) durchzuführen, welche durch ein Innenfunksystem (15) versorgt wird, welches Trägeraggregation von Komponententrägern nutzt, um Auswahl einer sekundären versorgenden Zelle zu ermöglichen, wobei das Innenfunksystem(15) in einem ersten Satz von zumindest einem Frequenzband, welches mit zumindest einer benachbarten Basisstation (20) geteilt wird, und einem zweiten Satz von zumindest einem Frequenzband, welches nicht von der zumindest einen benachbarten Basisstation (20) verwendet wird, betrieben wird,
wobei das Gerät (100; 200) konfiguriert ist, falls bestimmt wird, dass es einen Mangel an Innendominanz in einem oder mehreren Bändern des ersten Satzes von Frequenzband bzw. Frequenzbändern gibt, einen Komponententräger des zweiten Satzes von Frequenzbändern auszuwählen, um die sekundäre versorgende Zelle mit höherer Priorität zu übertragen als einen Komponententräger des einen oder der mehreren Bänder des ersten Satzes von Frequenzbändern, in welchem es einen Mangel an Innendominanz gibt; wobei ein Mangel an Innendominanz auftritt, wenn die benachbarte Basisstation ein stärkeres Signal bereitstellt als das Innenfunksystem, und
wobei das Gerät (100; 200) konfiguriert ist, falls bestimmt wird, dass es Innendominanz in einem oder mehreren Bändern des ersten Satzes von Frequenzbändern gibt, einen Komponententräger des einen oder der mehreren Bänder des ersten Satzes von Frequenzbändern, in welchem es Innendominanz gibt, aus dem Innenfunksystem auszuwählen, um die sekundäre versorgende Zelle mit höherer Priorität zu übertragen als einen Komponententräger des zweiten Satzes von Frequenzbändern, wobei Innendominanz auftritt, wenn das Innenfunksystem ein stärkeres Signal bereitstellt als die benachbarte Basisstation.

12. Gerät nach Anspruch 11, wobei das Gerät (100; 200) konfiguriert ist, Auswahl einer sekundären versorgenden Zelle auf Basis des zweiten Satzes von Frequenzbändern durchzuführen, welcher ein Satz von Frequenzbändern in lizenzfreiem Spektrum und/oder ein Satz von Innenfrequenzbändern ist.

13. Gerät nach Anspruch 11 oder 12, wobei das Gerät (100; 200) konfiguriert ist, wenn bestimmt wird, dass es einen Mangel an Innendominanz in jedem Band des ersten Satzes von Frequenzbändern gibt, einen Komponententräger des zweiten Satzes von Frequenzbändern auszuwählen, um die sekundäre versorgende Zelle zu übertragen, und
wobei das Gerät (100; 200) konfiguriert ist, falls bestimmt wird, dass es Innendominanz in einem oder mehreren Bändern des ersten Satzes von Frequenzbändern gibt, einen Komponententräger des einen oder der mehreren Bänder des ersten Satzes von Frequenzbändern, in welchen es Innendominanz gibt, auszuwählen, um die sekundäre versorgende Zelle zu übertragen.

14. Gerät einem der Ansprüche 11 bis 13, wobei das Gerät (100; 200) konfiguriert ist, einen Komponententräger des zweiten Satzes von Frequenzbändern durch Auswählen eines Komponententrägers eines lizenzierten Frequenzbands des zweiten Satzes von Frequenzbändern mit höherer Priorität als ein lizenzfreies Frequenzband des zweiten Satzes auszuwählen.

15. Gerät einem der Ansprüche 11 bis 14, wobei das Gerät (100; 200) konfiguriert ist, zu bestimmen, ob es Innendominanz oder Mangel an Innendominanz gibt, zumindest teilweise auf Basis von Signalmessungen an einem oder mehreren Bändern des ersten Satzes von Frequenzbändern, durchgeführt von dem drahtlosen Kommunikationsgerät (30).

16. Gerät nach Anspruch 15, wobei das Gerät (100; 200) konfiguriert ist, zu bestimmen, dass es Mangel an Innendominanz in dem einen oder den mehreren Bändern des ersten Satzes von Frequenzbändern gibt, wenn ein Signal in dem einen oder den mehreren Bändern des ersten Satzes von Frequenzbändern von der benachbarten Basisstation (20) stärker ist als ein Signal in dem einen oder den mehreren Bändern des ersten Satzes von Frequenzbändern von der Innenbasisstation (15), wie von dem drahtlosen Kommunikationsgerät (30) gemessen.

17. Gerät nach Anspruch 15 oder 16, wobei das Gerät (100; 200) konfiguriert ist, zu bestimmen, dass Innendominanz in dem einen oder den mehreren Bändern des ersten Satzes von Frequenzbändern gibt, wenn ein Signal in dem einen oder den mehreren Bändern des ersten Satzes von Frequenzbändern von der benachbarten Basisstation (20) schwächer ist als ein Signal in dem einen oder den mehreren Bändern des ersten Satzes von Frequenzbändern von der Innenbasisstation (15), wie von dem drahtlosen Kommunikationsgerät (30) gemessen.

18. Gerät nach einem der Ansprüche 11 bis 17, wobei das Gerät (100; 200) einen Prozessor (110; 210) und Speicher (120; 220) umfasst, wobei der Speicher (120; 220) Anweisungen umfasst, welche durch den Prozessor (110, 210) ausführbar sind, wobei der Prozessor (110; 210) betreibbar ist, um Auswahl einer sekundären versorgenden Zelle auszuführen.

19. Innenfunksystem (15), umfassend ein Gerät (100; 200) nach einem der vorstehenden Ansprüche 11 bis 18.

20. Netzwerkgerät (40), umfassend ein Gerät (100; 200) nach einem der Ansprüche 11 bis 18.

21. Netzwerkgerät nach Anspruch 20, wobei das Netzwerkgerät (40) Teil einer zentralisierten Funkzugangsnetzwerkbereitstellung oder eines cloudbasierten Netzwerkgeräts ist.

22. Computerprogramm (225; 235), welches Anweisungen umfasst, welche bei Ausführung des Programms mittels eines Computers, den Computer veranlassen, das Verfahren nach Anspruch 1 auszuführen.

23. Rechnerlesbares Medium (220; 230), welches Anweisungen umfasst, welche bei Ausführung durch einen Computer, den Computer veranlassen, das Verfahren nach Anspruch 1 auszuführen.

## Revendications

1. Procédé de sélection de cellule de desserte secondaire pour un dispositif de communication sans fil (30) desservi par un système radio intérieur (15) employant une agrégation de porteuses constituée de porteuses composantes pour permettre la sélection d'une cellule de desserte secondaire, le système radio intérieur fonctionnant (15) dans un premier ensemble d'au moins une bande de fréquence, partagée avec au moins une station de base voisine (20), et un second ensemble d'au moins une bande de fréquence, non utilisée par l'au moins une station de base voisine (20), dans lequel ledit procédé comprend :
- la sélection (S1), s'il est déterminé qu'il y a absence de domination intérieure sur une ou plusieurs bandes du premier ensemble de bande(s) de fréquence, d'une porteuse composante du second ensemble de bande(s) de fréquence pour porter la cellule de desserte secondaire avec une priorité supérieure à celle d'une porteuse composante desdites une ou plusieurs bandes du premier ensemble de bande(s) de fréquence sur lesquelles il y a absence de domination intérieure ; dans lequel l'absence de domination intérieure est observée lorsque la station de base voisine fournit un signal plus puissant que celui du système radio intérieur, et
- la sélection (S2), s'il est déterminé qu'il y a domination intérieure sur une ou plusieurs bandes du premier ensemble de bande(s) de fréquence, d'une porteuse composante desdites une ou plusieurs bandes du premier ensemble de bande(s) de fréquence sur lesquelles il y a domination intérieure, par le système radio intérieur, pour porter la cellule de desserte secondaire avec une priorité supérieure à celle d'une porteuse composante du second ensemble de bande(s) de fréquence, dans lequel la domination intérieure est observée lorsque le système radio intérieur fournit un signal plus puissant que celui de la station de base voisine.

2. Procédé selon la revendication 1, dans lequel le second ensemble de bande(s) de fréquence est un ensemble de bande(s) de fréquence dans un spectre sans licence et/ou un ensemble de bande(s) de fréquence intérieure(s).

3. Procédé selon les revendications 1 ou 2, dans lequel, s'il est déterminé qu'il y a absence de domination intérieure sur chaque bande du premier ensemble de bande(s) de fréquence, une porteuse composante du second ensemble de bande(s) de fréquence est sélectionnée pour porter la cellule de desserte secondaire ; et
dans lequel, s'il est déterminé qu'il y a domination intérieure sur une ou plusieurs bandes du premier ensemble de bande(s) de fréquence, une porteuse composante desdites une ou plusieurs bandes du premier ensemble de bande(s) de fréquence sur lesquelles il y a domination intérieure est sélectionnée pour porter la cellule de desserte secondaire.

4. Procédé selon l'une quelconque des revendications 1 à 3, dans lequel l'étape de sélection d'une porteuse composante du second ensemble de bande(s) de fréquence comprend la sélection d'une porteuse composante d'une bande de fréquence sous licence du second ensemble avec une priorité supérieure à celle d'une bande de fréquence sans licence du second ensemble.

5. Procédé selon l'une quelconque des revendications 1 à 4, comprenant en outre le fait de déterminer (S0) s'il existe une domination intérieure ou une absence de domination intérieure au moins en partie d'après des mesures de signal sur une ou plusieurs bandes du premier ensemble de bande(s) de fréquence, effectuées par le dispositif de communication sans fil (30).

6. Procédé selon la revendication 5, dans lequel il est déterminé qu'il y a absence de domination intérieure sur lesdites une ou plusieurs bandes du premier ensemble de bande(s) de fréquence lorsqu'un signal sur lesdites une ou plusieurs bandes du premier ensemble de bande(s) de fréquence provenant de la station de base voisine (20) est plus puissant qu'un signal sur lesdites une ou plusieurs bandes du premier ensemble de bande(s) de fréquence provenant du système radio intérieur (15) tel que mesuré par le dispositif de communication sans fil (30).

7. Procédé selon les revendications 5 ou 6, dans lequel il est déterminé qu'il y a domination intérieure sur lesdites une ou plusieurs bandes du premier ensemble de bande(s) de fréquence lorsqu'un signal sur lesdites une ou plusieurs bandes du premier ensemble de bande(s) de fréquence provenant de la station de base voisine (20) est plus faible qu'un signal sur lesdites une ou plusieurs bandes du premier ensemble de bande(s) de fréquence provenant du système radio intérieur (15) tel que mesuré par le dispositif de communication sans fil (30).

8. Procédé selon l'une quelconque des revendications 1 à 7, dans lequel le système radio intérieur (15) est une station de base intérieure et l'au moins une station de base voisine (20) est une station de base extérieure.

9. Procédé selon l'une quelconque des revendications 1 à 8, dans lequel le procédé est effectué par le système radio intérieur (15) ou un dispositif de réseau (40) en liaison avec le système radio intérieur.

10. Procédé selon la revendication 9, dans lequel le dispositif de réseau (40) fait partie d'un déploiement de réseau d'accès radio centralisé ou d'un dispositif de réseau en nuage.

11. Dispositif (100 ; 200) configuré pour effectuer un procédé de sélection de cellule de desserte secondaire pour un dispositif de communication sans fil (30) desservi par un système radio intérieur (15) employant une agrégation de porteuses constituée de porteuses composantes pour permettre la sélection d'une cellule de desserte secondaire, le système radio intérieur fonctionnant (15) dans un premier ensemble d'au moins une bande de fréquence, partagée avec au moins une station de base voisine (20), et un second ensemble d'au moins une bande de fréquence, non utilisée par l'au moins une station de base voisine (20),
dans lequel le dispositif (100 ; 200) est configuré pour sélectionner, s'il est déterminé qu'il y a absence de domination intérieure sur une ou plusieurs bandes du premier ensemble de bande(s) de fréquence, une porteuse composante du second ensemble de bande(s) de fréquence pour porter la cellule de desserte secondaire avec une priorité supérieure à celle d'une porteuse composante desdites une ou plusieurs bandes du premier ensemble de bande(s) de fréquence sur lesquelles il y a absence de domination intérieure; dans lequel l'absence de domination intérieure est observée lorsque la station de base voisine fournit un signal plus puissant que celui du système radio intérieur, et
dans lequel le dispositif (100 ; 200) est configuré pour sélectionner, s'il est déterminé qu'il y a domination intérieure sur une ou plusieurs bandes du premier ensemble de bande(s) de fréquence, une porteuse composante desdites une ou plusieurs bandes du premier ensemble de bande(s) de fréquence sur lesquelles il y a domination intérieure, par le système radio intérieur, pour porter la cellule de desserte secondaire avec une priorité supérieure à celle d'une porteuse composante du second ensemble de bande(s) de fréquence, dans lequel la domination intérieure est observée lorsque le système radio intérieur fournit un signal plus puissant que celui de la station de base voisine.

12. Dispositif selon la revendication 11, dans lequel le dispositif (100 ; 200) est configuré pour effectuer un procédé de sélection de cellule de desserte secondaire en se basant sur le fait que le second ensemble de bande(s) de fréquence est un ensemble de bande(s) de fréquence dans un spectre sans licence et/ou un ensemble de bande(s) de fréquence intérieure(s).

13. Dispositif selon les revendications 11 ou 12, dans lequel le dispositif (100 ; 200) est configuré pour sélectionner, s'il est déterminé qu'il y a absence de domination intérieure sur chaque bande du premier ensemble de bande(s) de fréquence, une porteuse composante du second ensemble de bande(s) de fréquence pour porter la cellule de desserte secondaire ; et
dans lequel le dispositif (100 ; 200) est configuré pour sélectionner, s'il est déterminé qu'il y a domination intérieure sur une ou plusieurs bandes du premier ensemble de bande(s) de fréquence, une porteuse composante desdites une ou plusieurs bandes du premier ensemble de bande(s) de fréquence sur lesquelles il y a domination intérieure, pour porter la cellule de desserte secondaire.

14. Dispositif selon l'une quelconque des revendications 11 à 13, dans lequel le dispositif (100 ; 200) est configuré pour sélectionner une porteuse composante du second ensemble de bande(s) de fréquence en sélectionnant une porteuse composante d'une bande de fréquence sous licence du second ensemble avec une priorité supérieure à celle d'une bande de fréquence sans licence du second ensemble.

15. Dispositif selon l'une quelconque des revendications 11 à 14, dans lequel le dispositif (100 ; 200) est configuré pour déterminer s'il y a domination intérieure ou absence de domination intérieure au moins en partie d'après des mesures de signal sur une ou plusieurs bandes du premier ensemble de bande(s) de fréquence effectuées par le dispositif de communication sans fil (30).

16. Dispositif selon la revendication 15, dans lequel le dispositif (100 ; 200) est configuré pour déterminer qu'il y a absence de domination intérieure sur lesdites une ou plusieurs bandes du premier ensemble de bande(s) de fréquence lorsqu'un signal sur lesdites une ou plusieurs bandes du premier ensemble de bande(s) de fréquence provenant de la station de base voisine (20) est plus puissant qu'un signal sur lesdites une ou plusieurs bandes du premier ensemble de bande(s) de fréquence provenant de la station de base intérieure (15) tel que mesuré par le dispositif de communication sans fil (30).

17. Dispositif selon les revendications 15 ou 16, dans lequel le dispositif (100 ; 200) est configuré pour déterminer qu'il y a domination intérieure sur lesdites une ou plusieurs bandes du premier ensemble de bande(s) de fréquence lorsqu'un signal sur lesdites une ou plusieurs bandes du premier ensemble de bande(s) de fréquence provenant de la station de base voisine (20) est plus faible qu'un signal sur lesdites une ou plusieurs bandes du premier ensemble de bande(s) de fréquence provenant de la station de base intérieure (15) tel que mesuré par le dispositif de communication sans fil (30).

18. Dispositif selon l'une quelconque des revendications 11 à 17, dans lequel le dispositif (100 ; 200) comprend un processeur (110 ; 210) et une mémoire (120 ; 220), ladite mémoire (120 ; 220) comprenant des instructions exécutables par ledit processeur (110 ; 210), moyennant quoi ledit processeur (110 ; 210) est opérationnel pour effectuer une sélection de cellule de desserte secondaire.

19. Système radio intérieur (15) comprenant un dispositif (100 ; 200) selon l'une quelconque des revendications 11 à 18.

20. Dispositif de réseau (40) comprenant un dispositif (100 ; 200) selon l'une quelconque des revendications 11 à 18.

21. Dispositif de réseau selon la revendication 20, dans lequel le dispositif de réseau (40) fait partie d'un déploiement de réseau d'accès radio centralisé ou d'un dispositif de réseau en nuage.

22. Programme informatique (225 ; 235) comprenant des instructions qui, lorsque le programme est exécuté par un ordinateur, amènent l'ordinateur à effectuer le procédé selon la revendication 1.

23. Support lisible sur ordinateur (220 ; 230) comprenant des instructions qui, lorsqu'elles sont exécutées par un ordinateur, amènent l'ordinateur à effectuer le procédé selon la revendication 1.
